# FASCICULE DE BREVET EUROPEEN

(11) **EP 1 237 299 B1**
(45) Date de publication et mention de la délivrance du brevet: **01.12.2004**
(21) Numéro de dépôt: 02290146.6
(22) Date de dépôt: 21.01.2002
(51) Int. Cl.: H04B 7/185

(54) **Agencement de connexion pour ensemble modulaire de traitement de signaux d'un satellite spatial et satellite équipe d'un tel agencement**
Schaltungsanordnung für modulare Signalrechnervorrichtung eines Satelliten im Weltraum und Satellit mit so einer Anordnung
Connection arrangement for a signal processing modular assembly of a satellite in space and satellite with such an arrangement

(30) Priorité: 01.03.2001 FR 0102809
(43) Date de publication de la demande: 04.09.2002
(73) Titulaire: ALCATEL, 75008 Paris (FR)
(72) Inventeur: Pinsard, Anne, 31320 Pechabou (FR); Le Du, Yann, 31700 Blagnac (FR)
(74) Mandataire: Smith, Bradford Lee

(56) Documents cités:
- EP-A- 0 752 756
- EP-A- 0 817 402
- US-A- 4 316 159
- US-A- 5 696 470

## Description

L'invention concerne un agencement de connexion pour ensemble modulaire de traitement de signaux embarqué à bord d'un satellite spatial et en particulier d'un satellite de télécommunications. Cet agencement de connexion est destiné à être associé à un ensemble constitué de modules de traitement nominaux auxquels sont associés des modules de traitement redondants. Ces derniers sont prévus pour être individuellement substitués aux modules nominaux, sur commande.

L'invention concerne aussi un satellite spatial équipé d'un ensemble modulaire de traitement et doté d'un tel agencement de connexion.

Comme il est connu, il est souvent nécessaire de traiter, d'une manière ou d'une autre, des signaux de communication et par exemple des signaux radiofréquences à bord d'un satellite en orbite, pour les exploiter ou pour les retransmettre. Il est couramment prévu de faire subir un traitement au moyen d'amplificateurs et/ou de convertisseurs de fréquence à des signaux reçus, en particulier dans le cas de signaux reçus par un satellite de télécommunications.

Lorsqu'un satellite spatial comporte un ensemble organisé de manière modulaire pour traiter des signaux reçus, il associe habituellement des modules de traitement redondants à des modules de traitement nominaux. Ces modules redondants sont destinés à être individuellement substitués à l'un ou l'autre des modules nominaux normalement chargés d'assurer le traitement, si une défaillance empêche un fonctionnement correct d'un de ces modules nominaux, alors que le satellite est en orbite.

La substitution d'un module redondant à un module nominal donné implique l'établissement de liaisons permettant, d'une part, au signal transmis depuis une entrée, pour traitement par ledit module nominal donné, d'être reçu par le module redondant substitué et, d'autre part, au signal, traité par ledit module redondant, d'être aiguillé en sortie de ce module, de manière à se substituer au signal antérieurement traité par le module nominal donné. Ces liaisons sont généralement assurées par l'intermédiaire d'un agencement de connexion comportant un sous-ensemble d'entrée par l'intermédiaire duquel les signaux à traiter sont reçus. Cette réception est susceptible de s'effectuer par l'intermédiaire d'un nombre déterminé d'entrées à partir desquelles les signaux reçus sont sélectivement aiguillés chacun vers un module différent pour traitement.

L'agencement de connexion comporte aussi un sous-ensemble de sortie, par l'intermédiaire duquel les signaux traités par les modules sont aiguillés d'une manière déterminée depuis ces modules. Les signaux à traiter sont, par exemple, des signaux radiofréquences, captés par une ou plusieurs antennes de réception d'un satellite. Ils sont sélectivement orientés vers des modules de traitement, par l'intermédiaire d'un sous-ensemble d'entrée tel qu'évoqué ci-dessus, usuellement après une première amplification et, si besoin est une sélection. Les signaux traités par les modules sont par exemple aiguillés vers des amplificateurs, avant exploitation à bord du satellite ou encore réémission depuis ce satellite, en particulier dans le cas d'un satellite de télécommunications.

Il est couramment prévu d'exploiter des liaisons réalisées à l'aide de câbles coaxiaux, pour transmettre les signaux radiofréquences reçus à destination d'un ensemble de traitement, à l'intérieur d'un satellite de télécommunications. Il est alors nécessaire que le satellite soit doté d'un sous-ensemble d'entrée qui comporte des organes de raccordement et/ou de commutation prévus pour de tels câbles coaxiaux.

Pour des raisons de fiabilité, il est classique d'utiliser, au niveau de l'agencement de connexion, des moyens de commutation électromécaniques qui ne consomment pas d'énergie et qui sont dans un état stable à partir du moment où ils sont dans une des positions commutées qu'ils sont susceptibles de prendre.

Dans une forme de réalisation connue, un satellite de télécommunications, tel qu'évoqué ci-dessus, est équipé d'un agencement de connexion comportant un sous-ensemble d'entrée et un sous-ensemble de sortie qui sont dotés de moyens de commutation réalisés sous la forme de matrices. Ces matrices sont disposées de part et d'autre d'un ensemble de traitement qui est organisé de manière modulaire. Une première matrice constitue le sous-ensemble d'entrée et permet de relier individuellement chaque entrée de signal à traiter à un des modules de l'ensemble de traitement, pour des transmissions de signaux de faible puissance. Une seconde matrice constitue le sous-ensemble de sortie et permet de relier individuellement chacun des modules de l'ensemble de traitement à une sortie de signaux de forte puissance. Ces matrices sont composées à l'aide d'organes de commutation électromécaniques et sont raccordées à des liaisons réalisées à l'aide de câbles coaxiaux ou de guides d'ondes. Elles présentent l'inconvénient d'avoir une masse et un encombrement difficiles à réduire. Par contre, elles présentent l'avantage prépondérant de ne pas consommer d'énergie en dehors des phases où une opération de commutation d'une position à une autre est réalisée pour substituer un module à un autre. Normalement, une telle opération n'est que peu fréquemment réalisée au cours de la durée de vie d'un satellite. De plus, comme indiqué plus haut, ces matrices sont constituées d'organes de commutation, ou commutateurs, qui sont stables dans chacune de leurs positions commutées et qui ne présentent pas de risque d'être la cause de panne, une fois commutés.

Le sous-ensemble d'entrée d'un agencement de connexion, tel qu'envisagé ci-dessus, comporte une série de liaisons nominales, point à point, réalisées chacune entre une entrée de signaux et un module de traitement par l'intermédiaire d'un organe de commutation électromécanique. Cet organe permet de remplacer, sur commande, la liaison nominale qu'il réalise entre une entrée et un module par une liaison de secours entre cette entrée et un des modules de traitement redondants.

Il n'est pas prévu actuellement de remplacer les organes de commutation électromécaniques couramment mis en oeuvre, pour relier les entrées de signaux aux modules de traitement, par des moyens de commutation électroniques, réalisés sous forme de circuits intégrés. En effet, si ces circuits intégrés présentent un avantage certain en matière de masse et permettent une réduction significative en matière d'encombrement, ils ont pour inconvénient d'inclure des composants actifs qui consomment de l'énergie en permanence et qui sont susceptibles de causer des pannes inacceptables au niveau des liaisons nominales du fait de leur positionnement entre les entrées de signaux et les modules de traitement.

US-A-5,696,470 décrit un système de commutateurs électroniques avec redondance utilisé à bord de satellites.

L'invention propose donc un agencement de connexion destiné à être associé à un ensemble de traitement de signaux de communication composé de modules de traitement nominaux auxquels sont associés des modules de traitement redondants, qui sont individuellement substituables aux modules nominaux sur commande, à bord d'un satellite en orbite, ledit agencement de connexion incluant un sous-ensemble d'entrée par l'intermédiaire duquel les signaux à traiter, séparément reçus au niveau d'un nombre déterminé d'entrées de l'agencement, sont sélectivement aiguillés chacun vers un module pour traitement, ainsi qu'un sous-ensemble de sortie, par l'intermédiaire duquel les signaux traités sont aiguillés de manière prédéterminée depuis les modules qui les ont traités

Selon une caractéristique de l'invention, ledit sous-ensemble d'entrée comporte des coupleurs passifs, dits d'entrée, associés à une matrice de commutation, dite première matrice, les coupleurs passifs étant respectivement reliés chacun, d'une part, à une des différentes entrées de l'agencement et comportant chacun un premier port de sortie raccordé en entrée d'un des différents modules nominaux et un second port de sortie raccordé à une des différentes entrées individuelles comportées par ladite première matrice de commutation. Les sorties de cette matrice sont reliées chacune en entrée d'un des différents modules redondants et ladite matrice, constituée de commutateurs électroniques, est maintenue inactive, jusqu'à réception d'une commande de substitution d'un module redondant à l'un des modules nominaux, en provenance d'une unité de contrôle supervisant l'agencement. De ce fait la matrice que comporte le sous-ensemble d'entrée est sans influence tant qu'elle n'est pas activée et elle n'est pas susceptible d'être la cause d'une panne, pendant tout le temps où l'agencement de connexion fonctionne en exploitant uniquement les modules nominaux, c'est-à-dire tant qu'il est en phase de fonctionnement normal.

Selon une forme de mise en oeuvre de l'invention, l'agencement de connexion comporte un sous-ensemble d'entrée incluant des coupleurs passifs asymétriques qui présentent une différence de niveau de puissance pour leurs deux ports de sortie. Cette différence de niveaux est prévue pour compenser la perte de puissance affectant un signal qui est transmis, entre un coupleur passif et un module redondant par l'intermédiaire de la matrice de commutation, lorsque cette matrice est rendue active.

Selon une variante de l'invention, le sous-ensemble de sortie comporte des coupleurs passifs, dits de sortie, associés à une matrice de commutation, dite seconde matrice. Ces coupleurs passifs de sortie sont respectivement reliés chacun à une des différentes sorties de l'agencement et comportent chacun un premier port d'entrée raccordé en sortie d'un des différents modules nominaux et un second port d'entrée raccordé à une des différentes sorties individuelles comportées par la seconde matrice de commutation dont les entrées sont reliées chacune en sortie d'un des différents modules redondants. Ladite seconde matrice, constituée de commutateurs électroniques, est maintenue inactive, jusqu'à réception d'une commande de substitution d'un module redondant à l'un des modules nominaux en provenance d'une unité de contrôle supervisant l'agencement.

L'invention a aussi pour objet un satellite spatial équipé d'un ensemble de traitement de signaux de communication, composé de modules de traitement nominaux et de modules de traitement redondants qui sont individuellement substituables aux modules nominaux sur commande, et d'un agencement de connexion comportant un sous-ensemble d'entrée, par l'intermédiaire duquel les signaux à traiter, séparément reçus au niveau d'un nombre déterminé d'entrées de l'agencement sont sélectivement aiguillés chacun vers un module différent pour traitement, et un sous-ensemble de sortie, par l'intermédiaire duquel les signaux traités sont aiguillés de manière déterminée depuis les modules qui les ont traités.

Selon une caractéristique de l'invention, ledit satellite est équipé d'un agencement de connexion dont :
- le sous-ensemble d'entrée comporte des coupleurs passifs, dits d'entrée, associés à une première matrice de commutation, ces coupleurs passifs étant respectivement reliés chacun à une entrée différente de l'agencement et comportant chacun un premier port de sortie, raccordé en entrée d'un des différents modules nominaux, et un second port de sortie, raccordé à une des différentes entrées individuelles comportées par ladite première matrice de commutation, celle-ci ayant des sorties qui sont reliées chacune en entrée d'un module redondant différent ;
et/ou
- le sous-ensemble de sortie comporte des coupleurs passifs, dits de sortie, associés à une seconde matrice de commutation, ces coupleurs passifs étant respectivement reliés chacun à une sortie différente de l'agencement et comportant chacun un premier port d'entrée, raccordé en sortie d'un des différents modules nominaux, et un second port d'entrée, raccordé à une des différentes sorties individuelles comportées par ladite seconde matrice de commutation dont les entrées sont reliées chacune en sortie d'un module redondant différent, la première et/ou la seconde matrice de commutation étant maintenue(s) inactive(s), jusqu'à réception d'une commande de substitution d'un module redondant à l'un des modules nominaux en provenance d'une unité de contrôle supervisant l'agencement.

Selon une forme de mise en oeuvre de l'invention, le satellite comporte un agencement de connexion associé à un ensemble de traitement de signaux, composé de modules chargés chacun d'assurer une amplification du signal de communication qu'il reçoit.

Selon une variante de mise en oeuvre de l'invention, le satellite comporte un agencement de connexion associé à un ensemble de traitement de signaux, composé de modules chargés chacun d'assurer une conversion en fréquence du signal de communication qu'il reçoit.

Selon une forme particulière de mise en oeuvre de l'invention, le satellite comporte un agencement de connexion associé à un ensemble de traitement de signaux, composé de modules chargés chacun d'un traitement du signal de communication qu'il reçoit.

L'invention, ses caractéristiques et ses avantages sont précisés dans la description qui suit en liaison avec les figures évoquées ci-dessous.

La figure 1 présente un schéma de principe relatif à un satellite spatial incluant un agencement de connexion destiné à assurer les liaisons d'entrée et de sortie nécessaires au fonctionnement d'un ensemble modulaire de traitement de signaux du satellite.

La figure 2 présente un schéma relatif à un exemple d'agencement de connexion, selon l'invention, associé à un ensemble de traitement de signaux dans un satellite de télécommunications.

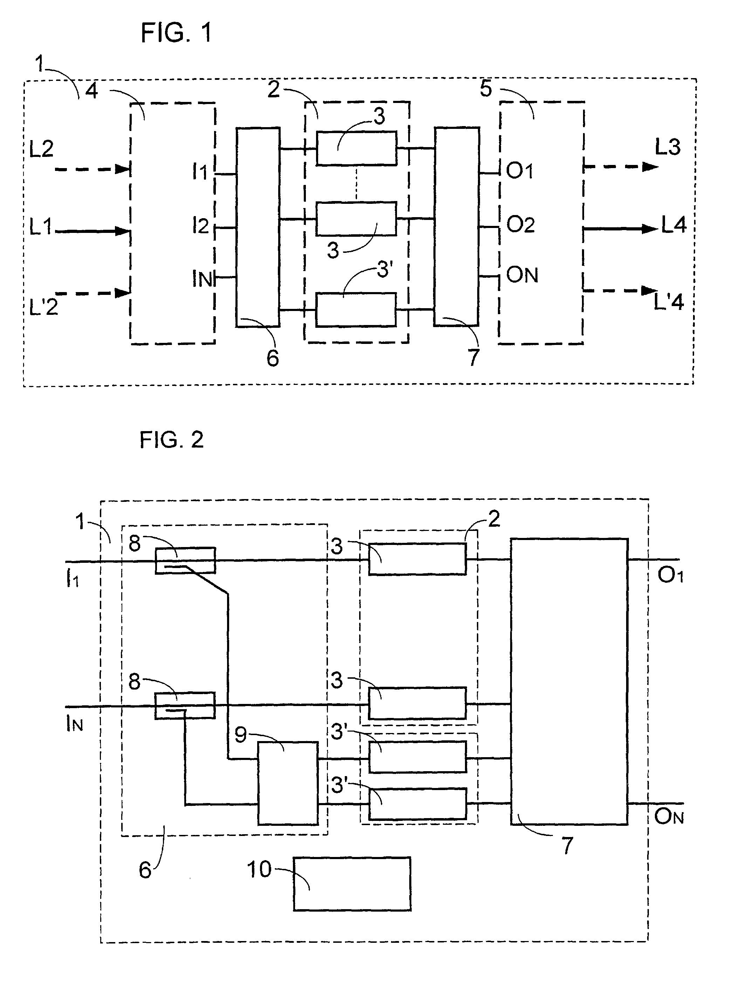

L'agencement de connexion présenté en figure 1 est destiné à être implanté dans un satellite spatial 1, tel que par exemple un satellite de télécommunications, pour assurer les liaisons d'entrée et de sortie de signaux d'un ensemble modulaire de traitement de signaux 2. Cet ensemble est supposé composé d'une pluralité de modules nominaux de traitement, ici symbolisés par deux modules 3, auxquels sont associés des modules redondants de traitement, ici symbolisés par un module 3'. Les modules redondants, dont le nombre est généralement moindre, sont prévus pour pouvoir être individuellement substitués aux modules nominaux, en cas de besoin. Chaque module nominal est supposé doté de moyens lui permettant de traiter un signal de communication et par exemple un signal radiofréquence, de même que chaque module redondant. Un module et en particulier un module redondant peut éventuellement disposer de moyens lui permettant de traiter un quelconque des signaux appartenant à un groupe déterminé de tels signaux.

Les signaux à traiter par un ensemble modulaire de traitement 2 sont supposés individuellement reçus par l'intermédiaire d'entrées, ici référencées de I₁ à I_{N}, alors que les signaux traités sont supposés fournis à des sorties, ici référencées de O₁ à O_{M}, les nombres M et N étant éventuellement identiques.

Comme il est connu, les signaux à traiter, fournis par les entrées I₁ à I_{N}, peuvent par exemple être des signaux qui ont été captés par l'intermédiaire d'une antenne de réception, non représentée, et qui sont obtenus, via une liaison matérielle L1 et par l'intermédiaire d'une interface d'entrée 4 ayant alors une fonction de démultiplexeur. Ces signaux à traiter peuvent alternativement être des signaux qui ont été captés par l'intermédiaire d'antennes de réception différentes et qui sont transmis aux entrées, via des liaisons telles que L2 et L'2, par l'intermédiaire d'une interface d'entrée 4 différant au moins partiellement de celle qui est évoquée ci-dessus, par exemple une interface d'entrée assurant une pré-amplification des signaux reçus par le satellite.

D'une manière analogue et comme il est connu, les signaux traités, fournis aux sorties O₁ à O_{N}, sont susceptibles d'être multiplexés au niveau d'une interface de sortie 5 pour pouvoir être transmis par une liaison L3 vers une antenne de réémission du satellite ou encore à des fins d'exploitation par un équipement dans le satellite lui-même. Ils peuvent alternativement être transmis via des liaisons distinctes, ici symbolisées par les liaisons L4 et L4', et par l'intermédiaire d'une interface de sortie 5 différente de la précédente, soit vers des antennes de réémission différentes, soit vers des équipements différents du satellite.

Le nombre de modules de traitement 3, 3' comporté par l'ensemble de traitement 2 diffère par principe de celui du nombre prévu d'entrées I₁ à Iₙ, dans la mesure où il est prévu un nombre de modules nominaux égal au nombre N d'entrée et un nombre déterminé de modules redondants en supplément. Il en est de même en ce qui concerne les nombres respectifs de sortie O₁ à O_{N} et de modules nominaux et redondants. De ce fait, il est nécessaire de disposer d'un agencement de connexion doté d'un sous-ensemble d'entrée 6 permettant d'aiguiller les signaux à traiter reçus séparément au niveau de chacune des entrées I₁ à I_{N} vers un module 3 ou 3' pour traitement, ainsi que d'un sous-ensemble de sortie 7 par l'intermédiaire duquel les signaux traités sont aiguillés de manière prédéterminée depuis les modules 3 ou 3' qui les ont traités. Dans le cadre de la présente invention, le traitement effectué par les modules sur les signaux qu'ils reçoivent, peut être réalisé à différentes fins et notamment à des fins d'amplification des signaux et/ou de changement de fréquence, comme déjà indiqué plus haut.

Dans la mesure où les modules de traitement 3, 3' de l'ensemble 2 sont susceptibles de comporter des composants actifs, ils présentent le risque d'être affectés de pannes occasionnées par des défaillances concernant ces composants. Ceci conduit à mettre en oeuvre un ensemble d'entrée d'agencement de connexion modulaire permettant de substituer, en cas de panne, un module redondant à un module nominal avec lequel il est compatible. Si N est le nombre de signaux distincts prévus au niveau de l'ensemble de traitement d'un satellite, il est donc prévu un nombre N de modules nominaux 3, initialement en service, et de P modules redondants 3', susceptibles de se substituer chacun à un module nominal en panne.

Selon l'invention et comme présenté sur la figure 2, il est prévu un agencement de connexion ayant un sous-ensemble d'entrée 6 permettant de relier chaque entrée I₁ à I_{N} de signaux à un coupleur passif 8 qui lui est individuellement attribué et qui reçoit donc le signal transmis par cette entrée. Chaque coupleur passif 8 dispose de deux sorties, ici dites ports de sortie. Un premier des ports de chaque coupleur passif est relié, de manière individuelle, à un module nominal 3 auquel il transmet les signaux reçus par le coupleur.

Le second des deux ports de sortie de chaque coupleur 8 est susceptible d'être relié à un module redondant 3' par l'intermédiaire d'une matrice de commutation 9 aux entrées de laquelle tous les coupleurs 8 sont individuellement reliés par leurs seconds ports de sortie respectifs. Cette matrice est composée à l'aide de composants actifs, constituant des commutateurs électroniques, et par exemple sous la forme d'une matrice MMIC (pour "microwave monolithic integrated circuit"). Elle a pour objet de permettre la transmission des signaux reçus par un coupleur 8, pour traitement par un module nominal 3, vers un module redondant 3' susceptible de se substituer à ce module nominal 3, lorsque celui-ci est défaillant. A cet effet, les modules redondants 3' sont respectivement reliés chacun à une sortie qui leur est individuellement affectée, au niveau de la matrice de commutation 9.

Les coupleurs passifs 8 sont susceptibles d'être réalisés en technique MMIC de même que la matrice active 9.

Les modules 3 et 3' sont par exemple des modules d'amplification à tubes à ondes progressives, désignés par l'acronyme TOP, ou des amplificateurs de puissance à l'état solide, désignés par l'acronyme SSPA, (pour "solid state power amplifier").

Chaque module de traitement, qu'il soit nominal ou redondant, a une sortie prévue pour venir se raccorder à une entrée individuelle du sous-ensemble de sortie 7. Ce dernier est ici supposé réalisé, de manière connue, sous la forme d'une matrice constituée à l'aide de composants électromécaniques de commutation ne consommant pas d'énergie à partir du moment où ils ont été commutés dans une ou l'autre de leurs positions stables. Cette matrice permet d'aiguiller chacun des signaux traités depuis le module qui l'a traité vers une des sorties de signaux, telles O₁ et O_{N}, que cette matrice dessert et ceci quel que soit le module nominal ou redondant qui l'a traité. La matrice constituant le sous-ensemble de sortie 7 est par exemple une matrice de puissance, réalisée de manière connue de l'homme de métier, à l'aide de composants électromécaniques de commutation, qui ne sont donc pas détaillés ici.

L'interposition de la matrice de commutation 9, entre les coupleurs 8 et les modules redondants 3', introduit une diminution du niveau de puissance des signaux qui sont amenés à la traverser, étant entendu qu'une telle matrice est ordinairement composée d'une pluralité d'étages dont au moins certains sont dissipatifs, lorsqu'elle est réalisée sous forme électronique. Il est donc nécessaire de prendre des mesures permettant d'éviter que la substitution d'un module redondant 3' à un module nominal 3 défaillant, ne se traduise par un abaissement du niveau de puissance des signaux traités qui sont fournis par le module redondant par rapport à ceux qu'aurait fourni le module nominal, s'il n'avait été défaillant.

Il est envisageable de diviser le signal de communication reçu par un coupleur en deux parties d'égale puissance, en exploitant un coupleur dont le niveau de couplage est approprié. Il est alors nécessaire de mettre en oeuvre des modules redondants, aptes à fournir des signaux d'une puissance correspondant à celle des signaux que fournis un module nominal, alors que la puissance des signaux reçus par ces modules redondants est inférieure à celle des signaux reçus par un module nominal.

Selon une forme préférée de réalisation, les coupleurs sont réalisés asymétriquement de manière à présenter une différence de niveaux de puissance au niveau de leurs deux ports de sortie. Cette différence est exploitée pour compenser à l'avance la perte de puissance, occasionnée par la matrice de commutation 9, qui affecte les signaux que cette matrice 9 transmet aux modules redondants.

La transmission de signaux entre une des entrées, telles que I₁ ou I_{N}, et une des sorties, telles que O₁ ou O_{N}, est prévue au travers d'une voie nominale incluant un coupleur passif 8 et un module nominal 3, tant qu'il n'est pas prévu de substituer un module redondant au module nominal, pour pallier une défaillance constatée au niveau de ladite voie nominale.

Par un choix approprié des valeurs de couplage des coupleurs dissymétriques 8 et par une configuration adroite de la topologie de la matrice 9 réalisée en technique MMIC, une égalité des pertes sur tous les chemins est susceptible d'être obtenue. Ceci permet de réduire les besoins en dynamique des amplificateurs de canaux dans le cas où les modules nominaux 3 et redondants 3' ont une fonction d'amplification, comme envisagé plus haut.

La matrice de commutation 9 peut être maintenue dans un état d'inactivité, pour lequel elle ne consomme pas d'énergie, tant qu'aucun signal de commande n'a été transmis depuis l'unité de contrôle 10 pour commander une commutation permettant de substituer un module redondant à un module nominal. Cet état d'inactivité est maintenu tant qu'il n'est pas détecté, soit au niveau du satellite, soit au niveau d'une station à terre, une détérioration de signal traduisant un fonctionnement défectueux pour une des voies nominales exploitées, dans le cadre des traitements effectués par les modules nominaux de l'ensemble de traitement 2. Comme la matrice de commutation 9 est hors des chemins nominaux, elle n'est pas susceptible de perturber le fonctionnement nominal et peut être maintenue éteinte, sans inconvénient.

Selon une variante de l'invention, le sous-ensemble de sortie d'un satellite spatial peut également comporter des coupleurs passifs associés à une matrice de commutation, dite seconde matrice, qui est distincte de celle prévue dans le sous-ensemble d'entrée. Ces coupleurs passifs, dits de sortie pour les différencier des précédents, sont respectivement reliés chacun à une des différentes sorties de l'agencement. Ils comportent chacun un premier port d'entrée raccordé en sortie d'un des différents modules nominaux et un second port d'entrée raccordé à une des différentes sorties individuelles comportées par la seconde matrice de commutation dont les entrées sont reliées chacune en sortie d'un des différents modules redondants. La seconde matrice est constituée de commutateurs électroniques et elle est maintenue inactive, jusqu'à réception d'une commande de substitution d'un module redondant à l'un des modules nominaux en provenance d'une unité de contrôle supervisant l'agencement. Il est aussi envisageable de réaliser un agencement de connexion qui comporte un sous-ensemble d'entrée et un sous-ensemble de sortie disposés de part et d'autre des modules d'un ensemble de traitement, comme envisagé ici, et dont seul le sous-ensemble de sortie comporte des coupleurs passifs et une matrice de commutation composée de commutateurs électroniques agencés, comme indiqué dans la variante mentionnée ci-dessus.

## Revendications

1. Agencement de connexion destiné à être associé à un ensemble de traitement de signaux de communication (2) composé de modules de traitement nominaux (3) auxquels sont associés des modules de traitement redondants (3') qui sont individuellement substituables aux modules nominaux sur commande à bord d'un satellite (1) en orbite, ledit agencement de connexion incluant un sous-ensemble d'entrée (6) par l'intermédiaire duquel les signaux à traiter, séparément reçus au niveau d'un nombre déterminé d'entrées (I₁ à I_{N}) de l'agencement sont sélectivement aiguillés chacun vers un module pour traitement et un sous-ensemble de sortie (7) par l'intermédiaire duquel les signaux traités sont aiguillés de manière prédéterminée depuis les modules (3 ou 3') qui les ont traités, ledit agencement étant **caractérisé en ce que** le sous-ensemble d'entrée comporte des coupleurs passifs, dits d'entrée, (8) associés à une matrice de commutation (9), dite première matrice, les coupleurs passifs étant respectivement reliés chacun à une des différentes entrées de l'agencement et comportant chacun un premier port de sortie, raccordé en entrée d'un des différents modules nominaux, et un second port de sortie, raccordé à une des différentes entrées individuelles comportées par la première matrice de commutation qui a ses sorties reliées chacune en entrée d'un des différents modules redondants, ladite première matrice, constituée de commutateurs électroniques, étant maintenue inactive, jusqu'à réception d'une commande de substitution d'un module redondant à l'un des modules nominaux en provenance d'une unité de contrôle supervisant l'agencement.

2. Agencement de connexion destiné à être associé à un ensemble de traitement de signaux de communication (2) composé de modules de traitement nominaux (3) auxquels sont associés des modules de traitement redondants (3') qui sont individuellement substituables aux modules nominaux sur commande à bord d'un satellite (1) en orbite, ledit agencement de connexion incluant un sous-ensemble d'entrée (6) par l'intermédiaire duquel les signaux à traiter, séparément reçus au niveau d'un nombre déterminé d'entrées (I₁ à I_{N}) de l'agencement sont sélectivement aiguillés chacun vers un module pour traitement et un sous-ensemble de sortie (7) par l'intermédiaire duquel les signaux traités sont aiguillés de manière prédéterminée depuis les modules (3 ou 3') qui les ont traités, ledit agencement étant **caractérisé en ce que** le sous-ensemble de sortie comporte des coupleurs passifs, dits de sortie, associés à une matrice de commutation, dite seconde matrice, les coupleurs passifs de sortie étant respectivement reliés chacun à une des différentes sorties de l'agencement et comportant chacun un premier port d'entrée, raccordé en sortie d'un des différents modules nominaux, et un second port d'entrée, raccordé à une des différentes sorties individuelles comportées par la seconde matrice de commutation qui a ses entrées reliées chacune en sortie d'un des différents modules redondants, ladite seconde matrice, constituée de commutateurs électroniques, étant maintenue inactive, jusqu'à réception d'une commande de substitution d'un module redondant à l'un des modules nominaux en provenance d'une unité de contrôle supervisant l'agencement.

3. Agencement de connexion, selon la revendication 1, dans lequel le sous-ensemble d'entrée comporte des coupleurs passifs asymétriques présentant une différence de niveau de puissance pour leurs deux ports de sortie, de manière à compenser la perte de puissance du signal transmis qui est introduite par la matrice de commutation dans une voie redondante parcourue par un signal transitant par un coupleur passif et un module redondant, lorsque cette matrice est rendue active.

4. Agencement de connexion, selon la revendication 2, dans lequel le sous-ensemble de sortie comporte des coupleurs passifs asymétriques présentant une différence de niveau de puissance pour leurs deux ports d'entrée, de manière à compenser la perte de puissance du signal transmis qui est introduite par la matrice de commutation dans une voie redondante parcourue par un signal transitant par un module redondant et un coupleur passif, lorsque cette matrice est rendue active.

5. Satellite spatial incluant un ensemble de traitement de signaux de communication (2) composé de modules de traitement nominaux (3) et de modules de traitement redondants (3') qui sont individuellement substituables aux modules nominaux sur commande, ainsi qu'un agencement de connexion incluant un sous-ensemble d'entrée (6) par l'intermédiaire duquel les signaux à traiter, séparément reçus au niveau d'un nombre déterminé d'entrées (I₁ à I_{N}) de l'agencement, sont sélectivement aiguillés chacun vers un module différent pour traitement et un sous-ensemble de sortie (7) par l'intermédiaire duquel les signaux traités sont aiguillés de manière déterminée depuis les modules (3 ou 3') qui les ont traités, ledit satellite étant **caractérisé en ce qu'**il comporte un agencement de connexion dont :
- le sous-ensemble d'entrée comporte des coupleurs passifs (8), dits d'entrée, associés à une première matrice de commutation (9), ces coupleurs passifs étant respectivement reliés chacun à une entrée différente de l'agencement et comportant chacun un premier port de sortie, raccordé en entrée d'un des différents modules nominaux, et un second port de sortie, raccordé à une des différentes entrées individuelles comportées par ladite première matrice de commutation dont les sorties sont reliées chacune en entrée d'un module redondant différent,
et/ou
- le sous-ensemble de sortie comporte des coupleurs passifs, dits de sortie, associés à une seconde matrice de commutation, ces coupleurs passifs étant respectivement reliés chacun à une sortie différente de l'agencement et comportant chacun un premier port d'entrée, raccordé en sortie d'un des différents modules nominaux, et un second port d'entrée, raccordé à une des différentes sorties individuelles comportées par ladite seconde matrice de commutation dont les entrées sont reliées chacune en sortie d'un module redondant différent, la première et/ou la seconde matrice de commutation, constituée(s) de commutateurs électroniques, étant maintenue(s) inactive(s), jusqu'à réception d'une commande de substitution d'un module redondant à l'un des modules nominaux en provenance d'une unité de contrôle (10) supervisant l'agencement.

6. Satellite spatial, selon la revendication 5, dans lequel l'agencement de connexion est associé à un ensemble de traitement de signaux composé de modules chargés chacun d'assurer une amplification du signal qu'il reçoit.

7. Satellite spatial, selon la revendication 5, dans lequel l'agencement de connexion est associé à un ensemble de traitement de signaux composé de modules chargés chacun d'assurer une conversion en fréquence du signal qu'il reçoit.

8. Satellite spatial, selon l'une des revendications 5 à 7, dans lequel l'agencement de connexion est associé à un ensemble de traitement qui est un ensemble de traitement de signaux, composé de modules chargés chacun d'un traitement du signal de communication qu'il reçoit.

## Claims

1. A connection arrangement for associating with a communications signal processing assembly (2) made up of nominal processor modules (3) associated with redundant processor modules (3') which are individually substitutable for the nominal modules on command on board a satellite (1) in orbit, said connection arrangement including an input subassembly (6) whereby the signals for processing as received separately via a determined number of inputs (I₁ to I_{N}) of the arrangement are each selectively directed to a module for processing, and an output subassembly (7) whereby the processed signals are directed in predetermined manner from the modules (3 or 3') that have processed them, said arrangement being **characterized in that** the input subassembly comprises passive "input" couplers (8) associated with a "first" switch matrix (9), each of the passive couplers being connected to a respective one of different inputs of the arrangement and each having a first output port connected to the input of one of the various nominal modules, and a second output port connected to one of the various individual inputs of the first switch matrix whose outputs are each connected to the input of a different redundant module, said first matrix, constituted by electronic switches, being kept inactive until a command is received for substituting a redundant module to take the place of one of the nominal modules, the command coming from a control unit supervising the arrangement.

2. A connection arrangement for associating with a communications signal processing assembly (2) made up of nominal processor modules (3) associated with redundant processor modules (3') which are individually substitutable for the nominal modules on command on board a satellite (1) in orbit, said connection arrangement including an input subassembly (6) whereby the signals for processing as received separately via a determined number of inputs (I₁ to I_{N}) of the arrangement are each selectively directed to a module for processing, and an output subassembly (7) whereby the processed signals are directed in predetermined manner from the modules (3 or 3') that have processed them, said arrangement being **characterized in that** the output subassembly comprises passive "output" couplers associated with a "second" switch matrix, each of the passive couplers being connected to a respective one of the various outputs of the arrangement and each having a first input port connected to the output of a example one of the various nominal modules, and a second input port connected to a respective one of the various outputs included in the second switch matrix which has each of its inputs connected to the output of a different one of the redundant modules, said second matrix, constituted by electronic switches, being maintained inactive until a command is received to substitute a redundant module for one of the nominal modules, the command coming from a control unit supervising the arrangement.

3. A connection arrangement according to claim 1, in which the input subassembly comprises asymmetrical passive couplers possessing different power levels for their two output ports, so as to compensate for the loss of power in the transmitted signal which is applied via the switch matrix to a redundant path conveying a signal transiting via a passive coupler and a redundant module, when said matrix is caused to be active.

4. A connection arrangement according to claim 2, in which the output subassembly comprises asymmetrical passive couplers presenting different power levels for their two input ports so as to compensate for the loss of power in the transmitted signal which is introduced via the switch matrix into a redundant path conveying a signal transiting via a redundant module and a passive coupler, when said matrix is caused to be active.

5. A space satellite including a communications signal processing assembly (2) made up of nominal processor modules (3) and of redundant processor modules (3') which are individually substitutable for the nominal modules on command, and also a connection arrangement including an input subassembly (6) whereby the signals for processing as separately received via a determined number of inputs (I₁ to I_{N}) of the arrangement are each selectively directed to a different module for processing, and an output subassembly (7) whereby the processed signals are directed in determined manner from the modules (3 or 3') that have processed them, said satellite being **characterized in that** it includes a connection arrangement in which:
. the input subassembly comprises passive "input" couplers (8) associated with a first switch matrix (9), each of the passive couplers being connected to a respective different input of the arrangement and each comprising a first output port connected to the input of a different one of the nominal modules, and a second output port connected to a different one of the individual inputs included in said first switch matrix whose outputs are each connected to the input of a different redundant module; and/or
. the output subassembly comprises passive "output" couplers associated with a second switch matrix, each of the passive couplers being connected to a respective different output of the arrangement and each comprising a first input port connected to the output of a different one of the nominal modules, and a second input port connected to a different one of the individual outputs included in said second switch matrix whose inputs are each connected to the output.of a different redundant module, the first and/or second switch matrix(es) being constituted by electronic switches and being maintained inactive until a command is received for substituting a redundant module for one of the nominal modules, the command coming from a control unit (10) supervising the arrangement.

6. A space satellite according to claim 5, in which the connection arrangement is associated with a signal processing assembly made up of modules each serving to amplify the signal it receives.

7. A space satellite according to claim 5, in which the connection arrangement is associated with a signal processing assembly made up of modules each serving to convert the frequency of the signal it receives.

8. A space satellite according to any one of claims 5 to 7, in which the connection arrangement is associated with a processing assembly which is a signal processing assembly made up of modules each serving to process the communications signal that it receives.

## Patentansprüche

1. Schaltungsanordnung, vorgesehen für den Einsatz in Verbindung mit einer Kommunikationssignalrechnervorrichtung (2), bestehend aus Hauptrechnermodulen (3), denen Reserverechnermodule (3') zugeordnet sind, welche die Hauptmodule auf einen Befehl hin einzeln ersetzen können und die sich an Bord eines Satelliten (1) im Weltraum befinden, wobei die Schaltungsanordnung eine Eingangs-Unterbaugruppe (6) enthält, über welche die zu verarbeitenden Signale, die an einer bestimmen Anzahl von Eingängen (I₁ bis I_{N}) der Anordnung getrennt empfangen werden, zur Verarbeitung selektiv jeweils einzeln zu einem Modul geleitet werden, sowie eine Ausgangs-Unterbaugruppe (7), über welche die verarbeiteten Signale in einer zuvor festgelegten Weise von den Modulen (3 oder 3') aus, die sie verarbeitet haben, weitergeleitet werden, wobei die Anordnung **dadurch gekennzeichnet ist, dass** die Eingangs-Unterbaugruppe passive sogenannte Eingangskoppler (8) umfasst, die einer als erste Matrix bezeichneten Schaltmatrix (9) zugeordnet sind, wobei die passiven Koppler jeweils mit einem der verschiedenen Eingänge der Anordnung verbunden sind und jeweils einen ersten Ausgangsanschluss aufweisen, der eingangsseitig mit einem der verschiedenen Hauptmodule verbunden ist, und einen zweiten Ausgangsanschluss, der mit einem der verschiedenen einzelnen Eingänge verbunden ist, die zu der ersten Schaltmatrix gehören, deren Ausgänge jeweils eingangsseitig mit einem der verschiedenen Reservemodule verbunden sind, wobei die genannte erste Matrix, die aus elektronischen Schaltern besteht, so lange inaktiv gehalten wird, bis von einer die Anordnung überwachenden Steuereinheit ein Befehl empfangen wird, dass eines der Hauptmodule durch ein Reservemodul ersetzt werden soll.

2. Schaltungsanordnung, vorgesehen für den Einsatz in Verbindung mit einer Kommunikationssignalrechnervorrichtung (2), bestehend aus Hauptrechnermodulen (3), denen Reserverechnermodule (3') zugeordnet sind, welche die Hauptmodule auf einen Befehl hin einzeln ersetzen können und die sich an Bord eines Satelliten (1) im Weltraum befinden, wobei die Schaltungsanordnung eine Eingangs-Unterbaugruppe (6) enthält, über welche die zu verarbeitenden Signale, die an einer bestimmen Anzahl von Eingängen (I₁ bis I_{N}) der Anordnung getrennt empfangen werden, zur Verarbeitung selektiv jeweils einzeln zu einem Modul geleitet werden, sowie eine Ausgangs-Unterbaugruppe (7), über welche die verarbeiteten Signale in einer zuvor festgelegten Weise von den Modulen (3 oder 3') aus, die sie verarbeitet haben, weitergeleitet werden, wobei die Anordnung **dadurch gekennzeichnet ist, dass** die Ausgangs-Unterbaugruppe passive sogenannte Ausgangskoppler umfasst, die einer als zweite Matrix bezeichneten Schaltmatrix zugeordnet sind, wobei die passiven Ausgangskoppler jeweils mit einem der verschiedenen Ausgänge der Anordnung verbunden sind und jeweils einen ersten Eingangsanschluss aufweisen, der ausgangsseitig mit einem der verschiedenen Hauptmodule verbunden ist, und einen zweiten Eingangsanschluss, der mit einem der verschiedenen einzelnen Ausgänge verbunden ist, die zu der zweiten Schaltmatrix gehören, deren Eingänge jeweils ausgangsseitig mit einem der verschiedenen Reservemodule verbunden sind, wobei die genannte zweite Matrix, die aus elektronischen Schaltern besteht, so lange inaktiv gehalten wird, bis von einer die Anordnung überwachenden Steuereinheit ein Befehl empfangen wird, dass eines der Hauptmodule durch ein Reservemodul ersetzt werden soll.

3. Schaltungsanordnung nach Anspruch 1, bei der die Eingangs-Unterbaugruppe passive asymmetrische Koppler umfasst, die für ihre beiden Ausgangsanschlüsse eine Leistungspegeldifferenz der Art aufweisen, dass der Leistungsverlust des übertragenen Signals ausgeglichen wird, das von der Schaltmatrix in einen redundanten Kanal eingespeist wird, welcher von einem Signal durchlaufen wird, dessen Weg durch einen passiven Koppler und ein Reservemodul verläuft, wenn diese Matrix in den aktiven Zustand versetzt wird.

4. Schaltungsanordnung nach Anspruch 2, bei der die Ausgangs-Unterbaugruppe passive asymmetrische Koppler umfasst, die für ihre beiden Eingangsanschlüsse eine Leistungspegeldifferenz der Art aufweisen, dass der Leistungsverlust des übertragenen Signals ausgeglichen wird, das von der Schaltmatrix in einen redundanten Kanal eingespeist wird, welcher von einem Signal durchlaufen wird, dessen Weg durch einen passiven Koppler und ein Reservemodul verläuft, wenn diese Matrix in den aktiven Zustand versetzt wird.

5. Weltraumsatellit, enthaltend eine Kommunikationssignalrechnervorrichtung (2), bestehend aus Hauptrechnermodulen (3) und Reserverechnermodulen (3'), welche auf einen Befehl hin die Hauptmodule einzeln ersetzen können, sowie eine Schaltungsanordnung, welche eine Eingangs-Unterbaugruppe (6) enthält, über welche die zu verarbeitenden Signale, die getrennt an einer bestimmten Anzahl von Eingängen (I₁ bis I_{N}) der Anordnung empfangen werden, zur Verarbeitung selektiv jeweils einzeln zu einem anderen Modul geleitet werden, sowie eine Ausgangs-Unterbaugruppe (7), über welche die verarbeiteten Signale von den Modulen (3 oder 3') aus, die sie verarbeitet haben, in einer bestimmten Weise weitergeleitet werden, wobei der Satellit **dadurch gekennzeichnet ist, dass** er eine Schaltungsanordnung aufweist, deren:
- Eingangs-Unterbaugruppe passive sogenannte Eingangskoppler (8) umfasst, die einer ersten Schaltmatrix (9) zugeordnet sind, wobei jeder dieser passiven Koppler jeweils mit einem anderen Eingang der Anordnung verbunden ist und jeweils einen ersten Ausgangsanschluss aufweist, der eingangsseitig mit einem der verschiedenen Hauptmodule verbunden ist, sowie einen zweiten Ausgangsanschluss, der mit einem der verschiedenen einzelnen Eingänge verbunden ist, die zu der genannten ersten Schaltmatrix gehören, deren Ausgänge jeweils eingangsseitig mit einem anderen Reservemodul verbunden sind;
und/oder
- Ausgangs-Unterbaugruppe passive sogenannte Ausgangskoppler umfasst, die einer zweiten Schaltmatrix zugeordnet sind, wobei jeder dieser passiven Koppler jeweils mit einem anderen Ausgang der Anordnung verbunden ist und jeweils einen ersten Eingangsanschluss aufweist, der ausgangsseitig mit einem der verschiedenen Hauptmodule verbunden ist, sowie einen zweiten Eingangsanschluss, der mit einem der verschiedenen einzelnen Ausgänge verbunden ist, die zu der genannten zweiten Schaltmatrix gehören, deren Eingänge jeweils ausgangsseitig mit einem anderen Reservemodul verbunden sind; hierbei wird (werden) die erste und/oder die zweite Schaltmatrix, die aus elektronischen Schaltern besteht (bestehen), so lange inaktiv gehalten, bis von einer die Anordnung überwachenden Steuereinheit (10) ein Befehl empfangen wird, dass eines der Hauptmodule durch ein Reservemodul ersetzt werden soll.

6. Weltraumsatellit nach Anspruch 5, bei dem die Schaltungsanordnung einer Signalrechnervorrichtung zugeordnet ist, die sich aus Modulen zusammensetzt, von denen jedes die Aufgabe hat, für eine Verstärkung des von ihm empfangenen Signals zu sorgen.

7. Weltraumsatellit nach Anspruch 5, bei dem die Schaltungsanordnung einer Signalrechnervorrichtung zugeordnet ist, die sich aus Modulen zusammensetzt, von denen jedes die Aufgabe hat, für eine Frequenzumsetzung des von ihm empfangenen Signals zu sorgen.

8. Weltraumsatellit nach einem der Ansprüche 5 bis 7, bei dem die Schaltungsanordnung einer Rechnervorrichtung zugeordnet ist, bei der es sich um eine Signalrechnervorrichtung handelt, bestehend aus Modulen, von denen jedes die Aufgabe hat, das von ihm empfangene Kommunikationssignal zu verarbeiten.
